# EUROPÄISCHE PATENTSCHRIFT

(11) **EP 1 323 937 B1**
(45) Veröffentlichungstag und Bekanntmachung des Hinweises auf die Patenterteilung: **04.05.2005**
(21) Anmeldenummer: 02400056.4
(22) Anmeldetag: 09.12.2002
(51) Int. Cl.: F16C 11/06

(54) **Kugelgelenk und Verfahren zu dessen Herstellung**
Ball joint and its manufacturing process
Articulation à rotule et son procédé de fabrication

(30) Priorität: 10.12.2001 DE 10160988
(43) Veröffentlichungstag der Anmeldung: 02.07.2003
(73) Patentinhaber: Sachsenring Zwickau AG, 08058 Zwickau (DE)
(72) Erfinder: Strauch, Jürgen, Dipl.-Ing., 08115 Lichtentanne (DE); Wackes, Ulrich, Dipl.-Ing., 08115 Lichtentanne (DE)
(74) Vertreter: Rumrich, Gabriele, Dipl.-Ing.

(56) Entgegenhaltungen:
- DE-B- 1 575 684
- GB-A- 1 328 884
- US-A- 3 231 299
- US-A- 4 290 181
- US-A- 4 875 794
- US-A- 5 653 545
- PATENT ABSTRACTS OF JAPAN vol. 014, no. 428 (M-1025), 14. September 1990 (1990-09-14) & JP 02 168012 A (MUSASHI SEIMITSU IND CO LTD), 28. Juni 1990 (1990-06-28)

## Beschreibung

Die Erfindung betrifft ein Kugelgelenk und ein Verfahren zur Herstellung eines Kugelgelenkes.

Nach DE 199 10 689 C1 ist ein Kugelgelenk bekannt, bestehend aus einem Gehäuse, einer darin eingesetzten Lagerschale, einem in der Lagerschale gelagerten Kugelzapfen mit einem Haltering versehen, der durch Rollen mit dem Gehäuse verbunden wird.

Dabei ist am Außendurchmesser des Gehäuses eine Nut für die Aufnahme eines Dichtungsbalges vorgesehen.

Es sind weiterhin Kugelgelenke bekannt ( DE 296 17 276 U1 bzw. DE 198 30 593 C1 ), bei welchen die Gelenkkugel ebenfalls in einer Lagerschale beweglich gelagert ist, wobei die Lagerschale, durch Einspritzen einer Kunststoffmasse in das Gelenkgehäuse, befestigt wird. In DE 296 17 276 U1 erfolgt die Befestigung des Dichtungsbalges am Außendurchmesser des Gelenkgehäuses, in DE 198 30 593 C1 am über dem Gelenkgehäuse überstehenden injizierten Kunststoff.

Problematisch bei diesen Lösungen ist, dass der eingespritzte Kunststoff schwindet.

Ausgehend von der US-A-3 231 299 besteht die Aufgabe der Erfindung darin, ein Kugelgelenk und ein Verfahren zu dessen Herstellung zu entwickeln, welches ein vollständiges Ausfüllen des Gelenkgehäuses gewährleistet, sicher einen Schmiermittelaustritt vermeidet und die Schwindung des injizierten Materials ausgleicht. Diese Aufgabe wird erfindungsgemäß mit den Merkmalen des 1 und 12. Patentanspruchs gelöst, vorteilhafte Ausführungen ergeben sich aus den Unteransprüchen.

Bevorzugt erfolgt das Verpressen des Verschlußrings mittels eines in Achsrichtung eingerollten Rollrandes des Gehäuses. Dabei schließt sich an der in Richtung zum Kugelzapfen weisenden Oberseite des Verschlußrings der Dichtungsbalg an. Der Dichtungsbalg weist einen radial nach außen führenden Dichtbereich auf, der sich mit dem Verschlußring unter dem Rollrand befindet. Vorteilhafter Weise ist dieser Dichtbereich als ein Metallring ausgebildet, der einen in Richtung zum Dichtungsbalg abgewinkelten Bereich aufweist und in den Dichtungsbalg eingebettet, bevorzugt einvulkanisiert ist. Zur Erzielung einer optimalen Dichtwirkung ist der Metallring mit einem Elastomer überzogen.

Der Verschlußring weist entweder einen kreisrunden Durchbruch für den Kugelzapfen auf oder einen Durchbruch, der dem Schwenkwinkel des Kugelzapfens angepasst ist.

Das injizierfähige Material besteht bevorzugt aus einem Kunststoff, dem auch zur Erzielung besonderer Eigenschaften, Zusatzstoffe oder -partikel beigemischt sein können.

Die Technologiefolge wird nachfolgend beschrieben.

Die Wandung des Hohlraumes des Gelenkgehäuses und /oder die Außenkontur der Gleitschale werden mit der Elastomerschicht versehen, z.B. durch Sprühen oder ein vergleichbares Beschichtungsverfahren. Der Kugelzapfen wird, mit der auf der Kugel befindlichen Gleitschale in den Hohlraum eingesetzt, wobei ein Spalt zwischen dem Außendurchmesser der Gleitschale und der Elastomerschicht der Wandung des Hohlraums des Gelenkgehäuses vorhanden ist. Nun wird der Kunststoff in diesen Spalt injiziert, wobei durch die relativ hohe Temperatur dieses injizierten Materials die Elastomerschicht vulkanisiert, und dadurch eine innige Verbindung mit dem injizierten Kunststoff bildet. Nun werden der Verschlußring und der Dichtbereich des Dichtungsbalges auf der Oberseite des Gehäuses positioniert. Abschließend erfolgt das Einrollen des Randes des Gehäuses, wodurch der Dichtbereich des Dichtungsbalges fest auf den Verschlußring gepresst wird und gleichzeitig der Verschlußring axial gegen das injizierte Material verpresst wird. Durch die axiale Pressung wird das injizierte Material in den Hohlraum gedrückt, damit eine Vorspannung erzeugt und somit eventueller Schwund ausgeglichen und eine sichere, verdrehfeste Verbindung mit der Gleitschale und der vulkanisierten Elastomerschicht gewährleistet.

Die Erfindung wird nachfolgend anhand eines Ausführungsbeispieles und zugehöriger Zeichnung näher erläutert.

Es zeigen:
- Fig. 1:: Gehäuse nach dem Injizieren mit vulkanisierter Schicht an der Wandung des Hohlraumes und der Außenkontur der Gleitschale, injiziertem Material und eingelegtem Kugelzapfen mit Gleitschale an der Kugel und mit aufgesetztem Verschlußring und Dichtungsbalg,
- Fig. 2:: Kugelgelenk nach Beendigung des Fertigungsprozesses mit eingerolltem Rand,
- Fig. 3:: Kugelgelenk, bei welchem Dichtbereich und Verschlußring einstückig ausgebildet sind.

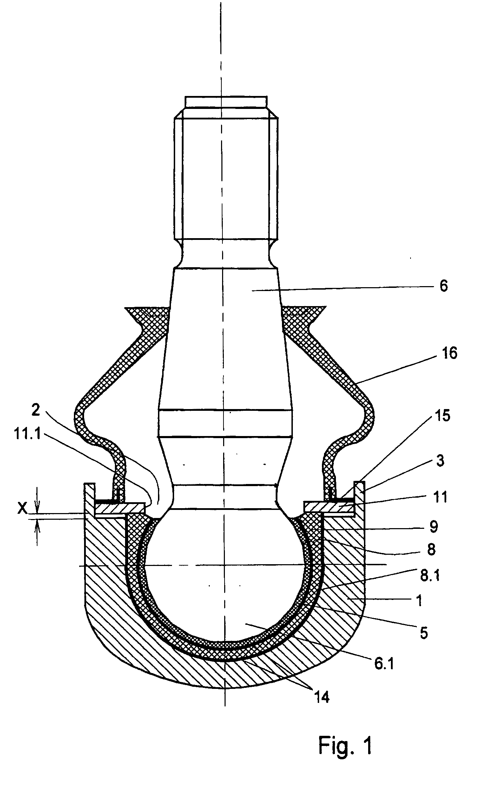

Die Figur 1 zeigt ein Gehäuse 1 mit einer Öffnung 2 und einem Hohlraum 8. Der Hohlraum 8 ist an seiner Wandung 8.1 und die Gleitschale 5 an ihrer Außenkontur mit einer Elastomerschicht 14 versehen. In dem Hohlraum 8 wurde der Kugelzapfen 6 mit der Kugel 6.1 und der darauf befindlichen Gleitschale 5 positioniert. Der Zwischenraum zwischen den beiden Elastomerschichten 14 wurde mit injizierfähigem Material, hier Kunststoff gefüllt, der nach dem Injizieren aushärtet, wobei ein gewisser Schwund zu verzeichnen ist. Durch die beim Injizieren des Kunststoffes auftretenden hohen Temperaturen vulkanisieren die Elastomerschichten 14 und verbinden sich innig mit dem injizierten Kunststoff 9. Nach Beendigung des Injizieren des Kunststoffes steht dieser um einen geringen Betrag X über der Oberseite der Öffnung des Gehäuses 1 über. An die Oberseite der Öffnung schließt sich eine Schulter 1.1 an, der sich ein sich axial in Richtung zum Kugelzapfen erstreckender, ringförmiger Randbereich 1.2 an, der den späteren Rollrand 3 bildet.

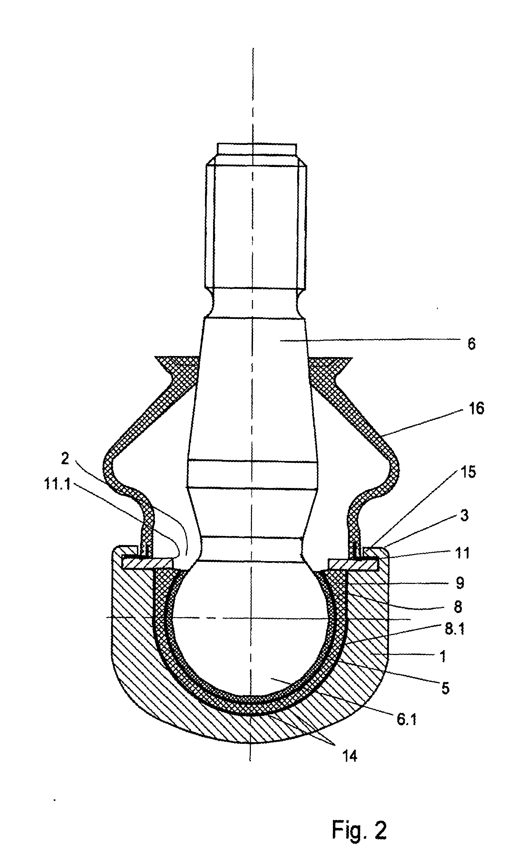

Nun werden auf die Schulter 1.1 und den überstehenden Bereich des injizierten Materials 14 der Verschlußring 11 und der Dichtbereich, hier ein radial nach außen weisender mit einer Elastomerschicht versehener Metallring 15, des Dichtungsbalges 16 aufgesetzt. Der Verschlußring 11 und der Metallring 15 reichen dabei bis an den Innendurchmesser des ringförmigen Randbereiches 1.2 des Gehäuses 1 heran. Weiterhin überdeckt der Verschlußring 11 zumindest teilweise das überstehende injizierte Material. Nun erfolgt in Pfeilrichtung mit einer Kraft F das radiale Einrollen des Randbereiches 1.2, wobei dieser in Richtung zum Kugelzapfen über den Metallring 15 des Dichtungsbalges und den Verschlußring 11 gebogen wird und den Rollrand 3 bildet. Dieser Rollrand 3 verpresst nun den Metallring 15 und den Verschlußring 11 axial in Richtung zum Hohlraum 8, wodurch der überstehende Bereich des injizierten Materials 9 mit einer axialen Druckspannung beaufschlagt wird. Der Materialschwund des injizierten Kunststoffes, der beim Erkalten entsteht, wird damit ausgeglichen. Durch das Einrollen des Randbereiches 1.2 wird weiterhin der mit einer Elastomerschicht versehene Metallring 15 (Dichtbereich) des Dichtungsbalges 16 gegen den Verschlußring gedrückt, so dass eine sichere Abdichtung der Gelenkverbindung gewährleistet ist. Das Kugelgelenk nach dem Einrollen ist in Figur 2 dargestellt.

Durch die an der Wandung 8.1 des Hohlraumes 8 und/oder an der Außenkontur der Gleitschale 5 befindliche Elastomerschicht wird eine hervorragende axiale und radiale Dämpfung erzielt. Die Elastomerschicht kann dabei durch Sprühen oder ein vergleichbares Beschichtungsverfahren vollflächig auf die unbearbeitete Gehäuseinnenseite bzw. auf die Gleitschale aufgebracht werden. Vorteilhaft ist weiterhin das gleichzeitige Verrollen von Verschlußring und Dichtungsbalg.

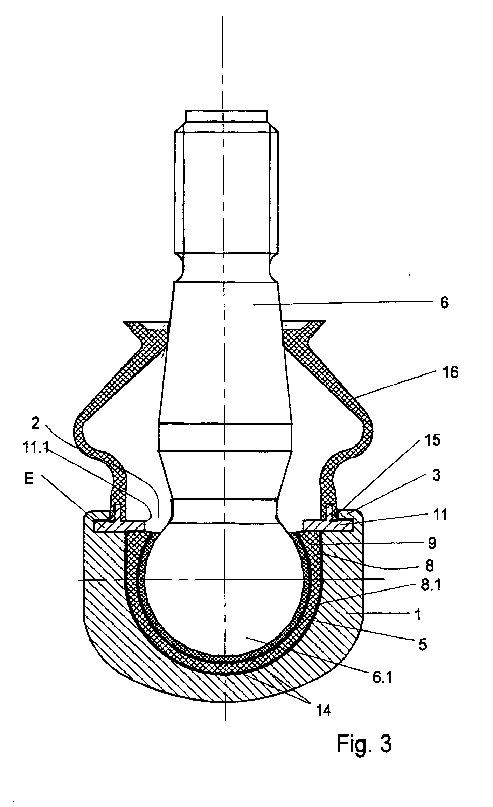

Dabei ist es alternativ auch möglich, den Verschlußring und den Metallring einteilig auszubilden (Fig. 3). Dazu wird ein im Querschnitt T-förmiges Element E in den Dichtungsbalg 1 einvulkanisiert und verrollt. Das Element E kann ebenfalls mit einer Elastomerschicht versehen sein.

Es wird insgesamt ein in sich abgeschlossenes Gelenk geschaffen, wobei die bisher aufwendige Montage eines Befestigungsringes für die Befestigung des Dichtungsbalges am Außendurchmesser des Gehäuses entfallen kann. Dadurch wird der Fertigungsprozess wesentlich vereinfacht.

Durch die Stärke des Verschlußringes sind weiterhin die Ausreißkräfte variierbar, weiterhin wird bei größerwerdenden Stärke des Verschlußringes ein größeres Verschleißvolumen gegen das Ausreisen des Kugelzapfens aus dem Gehäuse bei versagen der Gleitschale oder des injizierten Materials zur Verfügung gestellt.

## Patentansprüche

1. Kugelgelenk, welches ein Gehäuse (1) mit einer Öffnung (2) und einen mit einer Wandung (8.1) versehenen Hohlraum (8) zur Aufnahme einer in einer Gleitschale (5) beweglich gelagerten Kugel (6.1) eines Kugelzapfens (6) aufweist, wobei die Gleitschale (5) im Gehäuse (1) mit einem injizierfähigen und sich nach dem Injizieren verfestigenden Material (9) befestigt ist, und die Wandung (8.1) und/oder die Außenkontur der Gleitschale (5) mit einer bis zum injizierfähigen Material (9) reichenden ersten Elastomerschicht (14) versehen ist,
**dadurch gekennzeichnet,**
**dass** die erste Elastomerschicht (14) vulkanisiert ist und dadurch eine innige Verbindung mit dem sich verfestigten injizierfähigen Material (9) bildet, wobei ein Verschlussring (11) axial gegen das in Richtung zur Öffnung (2) weisende Ende des injizierfähigen Materials (9) verpresst ist, und daß ein Dichtungsbalg (16) in Richtung zum Kugelzapfen (6) am Gehäuse (1) befestigt ist.

2. Kugelgelenk nach Anspruch 1 , **dadurch gekennzeichnet, dass** der Verschlussring (11) mittels eines in Achsrichtung eingerollten Rollrandes (3) des Gehäuses (1) verpresst ist.

3. Kugelgelenk nach Anspruch 1 oder 2, **dadurch gekennzeichnet, dass** an der in Richtung zum Kugelzapfen (6) weisenden Oberseite des Verschlussringes (11) sich der Dichtungsbalg (16) anschließt.

4. Kugelgelenk nach einem der Ansprüche 1 bis 3, **dadurch gekennzeichnet, dass** der Dichtungsbalg (16) in Richtung zum Verschlussring (11) einen radial nach außen weisenden Dichtbereich aufweist, der sich mit dem Verschlussring (11) unter dem Rollrand (3) befindet.

5. Kugelgelenk nach Anspruch 4, **dadurch gekennzeichnet, dass** der Dichtbereich des Dichtungsbalges (16) als ein Metallring (15) ausgebildet ist.

6. Kugelgelenk nach Anspruch 5, **dadurch gekennzeichnet, dass** der Metallring (15) in Richtung zum Dichtungsbalg (16) abgewinkelt ist, wobei der abgewinkelte Bereich in den Dichtungsbalg (16) eingebettet ist.

7. Kugelgelenk nach Anspruch 5 oder 6, **dadurch gekennzeichnet, dass** der Metallring (15) in den Dichtungsbalg (16) einvulkanisiert ist.

8. Kugelgelenk nach einem der Ansprüche 5 bis 7, **dadurch gekennzeichnet, dass** der Metallring (15) mit einer zweiten Elastomerschicht ummantelt ist.

9. Kugelgelenk nach einem der Ansprüche 1 bis 8, **dadurch gekennzeichnet, dass** der Verschlussring (11) in Richtung zur Kugel (6.1) des Kugelzapfens (6) einen kreisrunden Durchbruch (11.1) aufweist oder dass der Durchbruch (11.1) entsprechend des Schwenkwinkels (α) des Kugelzapfens (6) geformt ist.

10. Kugelgelenk nach einem der Ansprüche 1 bis 9, **dadurch gekennzeichnet, dass** an der in Richtung zum Kugelzapfen weisenden Oberseite des Gehäuses (1) eine sich an die Öffnung (2) anschließende Schulter ausgebildet ist, auf welcher der Verschlussring (11) aufliegt.

11. Kugelgelenk nach Anspruch 10, **dadurch gekennzeichnet, dass** sich an die Schulter der den Verschlussring (11) und den Dichtbereich des Dichtungsbalgens umfassende Rollrand (3) anschließt.

12. Verfahren zur Herstellung eines Kugelgelenks nach dem Oberbegriff des Anspruchs 1 mit einem in Richtung zum Kugelzapfen (6) am Gehäuse (1) befestigten Dichtungsbalg (16), wobei
- die Kugel (3.1) des Kugelzapfens (6) mit der darauf befindlichen Gleitschale (5) im Hohlraum (8) des Gehäuses (1) positioniert wird,
- der noch vorhandene Hohlraum (8) mit injizierfähigem Material (9) gefüllt wird, wobei die erste Elastomerschicht (14) vulkanisiert unter Bildung einer innigen Verbindung mit dem sich verfestigenden injizierten Material,
- und anschließend das injizierte Material (9) durch Verpressen unter Vorspannung gesetzt wird.

13. Verfahren nach Anspruch 12, **dadurch gekennzeichnet, dass** das Verpressen des injizierfähigen Materials (9) mittels eines Verschlussringes (11) erfolgt, der axial gegen das injizierfähige Material (9) verpresst wird.

14. Verfahren nach Anspruch 13, **dadurch gekennzeichnet, dass** das verpressen des Verschlussringes (11) gegen das injizierfähige Material (9) durch radiales Einrollen eines Rollrandes (3) des Gehäuses (1) erfolgt.

15. Verfahren nach Anspruch 14, **dadurch gekennzeichnet, dass** gleichzeitig mit dem Einrollen des Rollrandes der Dichtungsbalg (16) über dem Verschlussring (11) befestigt wird.

## Claims

1. A ball-and-socket joint which comprises a housing (1) with an opening (2) and a hollow chamber (8) provided with a wall (8.1) for receiving a ball (6.1) of a ball pivot (6) movably held in a sliding shell (5), with the sliding shell (5) being fastened in the housing (1) with an injectable material (9) which solidifies after the injection, and with the wall (8.1) and/or the outside contour of the sliding shell (5) being provided with a first elastomer layer (14) reaching up to the injectable material (9), **characterized in that** the first elastomer layer (14) is vulcanized and thus forms an intimate connection with the solidifying injectable material (9), with a clamping ring (11) being pressed against the end of the injectable material (9) facing in the direction towards the opening (2), and that a sealing bellows (16) is fastened to the housing (1) in the direction towards the ball pivot (6).

2. A ball-and-socket joint according to claim 1, **characterized in that** the clamping ring (11) is pressed by means of welt (3) of the housing (1) which is rolled in the axial direction.

3. A ball-and-socket joint according to claim 1 or 2, **characterized in that** the sealing bellows (16) is adjacent to the upper side of the clamping ring (11) facing in the direction towards the ball pivot (6).

4. A ball-and-socket joint according to one of the claims 1 to 3, **characterized in that** the sealing bellows (16) comprises in the direction towards the clamping ring (11) a radially outwardly facing sealing region which is located with the clamping ring (11) below the welt (3).

5. A ball-and-socket joint according to claim 4, **characterized in that** the sealing region of the sealing bellows (16) is arranged as a metal ring (15).

6. A ball-and-socket joint according to claim 5, **characterized in that** the metal ring (15) is bent off in the direction towards the sealing bellows (16), with the bent-off region being embedded in the sealing bellows (16).

7. A ball-and-socket joint according to claim 5 or 6, **characterized in that** the metal ring (15) is vulcanized into the sealing bellows (16).

8. A ball-and-socket joint according to one of the claims 5 to 7, **characterized in that** the metal ring (15) is encased with a second elastomer layer.

9. A ball-and-socket joint according to one of the claims 1 to 8, **characterized in that** the clamping ring (11) comprises a circular breakthrough (11.1) in the direction towards the ball (6.1) of the ball pivot (6) or that the breakthrough (11.1) is shaped according to the pivoting angle (α) of the ball pivot (6).

10. A ball-and-socket joint according to one of the claims 1 to 9, **characterized in that** on the upper side of the housing (1) facing in the direction towards the ball pivot a shoulder adjacent to the opening (2) is formed on which the clamping ring (11) rests.

11. A ball-and-socket joint according to claim 10, **characterized in that** the welt (3) comprising the clamping ring (11) and the sealing region of the sealing bellows is adjacent to the shoulder.

12. A method for producing a ball-and-socket joint according to the preamble of claim 1, with a sealing bellows (16) fastened to the housing (1) in the direction towards the ball pivot (6), with
- the ball (3.1) of the ball pivot (6) with the sliding shell (5) situated thereon being positioned in the hollow chamber (8) of the housing (1);
- the still existing hollow chamber (8) being filled with an injectable material (9), with the first elastomer layer (14) vulcanizing by forming an intimate connection with the solidifying injected material;
- and thereafter the injected material (9) being placed under pretension by pressing.

13. A method according to claim 12, **characterized in that** the pressing of the injectable material (9) occurs by means of a clamping ring (11) which is pressed axially against the injectable material (9).

14. A method according to claim 13, **characterized in that** the pressing of the clamping ring (11) against the injectable material (9) occurs by radially rolling in a welt (3) of the housing (1).

15. A method according to claim 14, **characterized in that** the sealing bellows (16) is fastened over the clamping ring (11) simultaneously with the rolling of the welt.

## Revendications

1. Joint à rotule possédant un boîtier (1) avec une ouverture (2) et une cavité (8) pourvue d'une paroi (8.1) et destinée à recevoir une sphère (6.1) d'un tourillon à rotule (6) supportée de manière mobile dans une coque de glissement (5), la coque de glissement (5) étant fixée dans le boîtier (1) avec un matériau injectable (9) qui se solidifie après l'injection, et la paroi (8.1) et/ou le contour extérieur de la coque de glissement (5) étant pourvus d'une première couche d'élastomère (14) allant jusqu'au matériau injectable (9), **caractérisé en ce que** la première couche d'élastomère (14) est vulcanisée et forme ainsi une liaison intime avec le matériau injectable (9) solidifié, un anneau d'obturation (11) étant pressé dans le sens axial sur l'extrémité orientée vers l'ouverture (2) du matériau injectable (9), et **en ce qu'**un soufflet d'étanchéité (16) est fixé sur le boîtier (1) dans la direction du tourillon à rotule (6).

2. Joint à rotule selon la revendication 1, **caractérisé en ce que** l'anneau d'obturation (11) est pressé au moyen d'un bord roulé (3) du boîtier (1) qui est enroulé dans le sens axial.

3. Joint à rotule selon la revendication 1 ou 2, **caractérisé en ce que** le soufflet d'étanchéité (16) se raccorde sur la face supérieure de l'anneau d'obturation (11) orientée dans la direction du tourillon à rotule (6).

4. Joint à rotule selon l'une quelconque des revendications 1 à 3, **caractérisé en ce que** le soufflet d'étanchéité (16) présente dans la direction de l'anneau d'obturation (11) une zone d'étanchéité orientée vers l'extérieur dans le sens radial et qui se trouve sous le bord roulé (3) avec l'anneau d'obturation (11).

5. Joint à rotule selon la revendication 4, **caractérisé en ce que** la zone d'étanchéité du soufflet d'étanchéité (16) est conformée comme un anneau métallique (15).

6. Joint à rotule selon la revendication 5, **caractérisé en ce que** l'anneau métallique (15) est plié dans la direction du soufflet d'étanchéité (16), la partie pliée étant incluse dans le soufflet d'étanchéité (16).

7. Joint à rotule selon la revendication 5 ou 6, **caractérisé en ce que** l'anneau métallique (15) est inclus par vulcanisation dans le soufflet d'étanchéité (16).

8. Joint à rotule selon l'une quelconque des revendications 5 à 7, **caractérisé en ce que** l'anneau métallique (15) est entouré d'une deuxième couche d'élastomère.

9. Joint à rotule selon l'une quelconque des revendications 1 à 8, **caractérisé en ce que** l'anneau d'obturation (11) présente dans la direction de la sphère (6.1) du tourillon à rotule (6) une ouverture circulaire (11.1) ou **en ce que** l'ouverture (11.1) a une forme correspondant à l'angle de basculement (α) du tourillon à rotule (6).

10. Joint à rotule selon l'une quelconque des revendications 1 à 9, **caractérisé en ce qu'**un épaulement se raccordant à l'ouverture (2), sur lequel repose l'anneau d'obturation (11), est formé sur la face supérieure du boîtier (1) tournée dans la direction du tourillon à rotule.

11. Joint à rotule selon la revendication 10, **caractérisé en ce que** le bord roulé (3) renfermant l'anneau d'obturation (11) et la zone d'étanchéité du soufflet d'étanchéité se raccorde à l'épaulement.

12. Procédé pour la fabrication d'un joint à rotule selon le préambule de la revendication 1 avec un soufflet d'étanchéité (16) fixé au boîtier (1) dans la direction du tourillon à rotule (6), dans lequel
- la sphère (3.1) du tourillon à rotule (6) est positionnée avec la coque de glissement (5) qui se trouve dessus dans la cavité (8) du boîtier (1),
- le reste de la cavité (8) est rempli avec un matériau injectable (9), la première couche d'élastomère (14) étant vulcanisée en formant une liaison intime avec le matériau injecté qui se solidifie,
- et le matériau injecté (9) est ensuite précontraint par compression.

13. Procédé selon la revendication 12, **caractérisé en ce que** la compression du matériau injectable (9) est réalisée au moyen d'un anneau d'obturation (11) qui est pressé dans le sens axial contre le matériau injectable (9).

14. Procédé selon la revendication 13, **caractérisé en ce que** la compression de l'anneau d'obturation (11) contre le matériau injectable (9) est réalisée par l'enroulement radial d'un bord roulé (3) du boîtier (1).

15. Procédé selon la revendication 14, **caractérisé en ce qu'**en même temps que le bord roulé est enroulé, le soufflet d'étanchéité (16) est fixé par-dessus l'anneau d'obturation (11).
